Europäisches Patentamt

European Patent Office

Office européen des brevets

(19)

(11) Veröffentlichungsnummer: **0 212 369**

**A2**

(12) # EUROPÄISCHE PATENTANMELDUNG

(21) Anmeldenummer: 86110515.3

(22) Anmeldetag: 30.07.86

(51) Int. Cl.⁴ **F16N 13/16**

(30) Priorität: 03.08.85 DE 3527925

(43) Veröffentlichungstag der Anmeldung:
04.03.87 Patentblatt 87/10

(84) Benannte Vertragsstaaten:
**AT BE CH DE FR GB IT LI LU NL SE**

(71) Anmelder: **Pressol Schmiergeräte GmbH**
**Knebelstrasse 1-3**
**D-8500 Nürnberg 90(DE)**

(72) Erfinder: **Stahl, Franz**
**Bavariastrasse 24**
**D-8411 Falkenstein(DE)**

(74) Vertreter: **Böhme, Volker, Dr. et al**
**Patentanwälte Dr. Böhme, Kessel, Böhme**
**Karolinenstrasse 27**
**D-8500 Nürnberg(DE)**

(54) **Druckluftbetätigte Pumpe für Schmierstoffe.**

(57) Es gibt eine Pumpe, die selbsttätig gesteuert und druckluftbetätigt ist, indem eine Steuereinrichtung (14) einen auf einer Kolbenstange (11) angeordneten Schieber (19) aufweist. Dabei ist es erwünscht, wenn die Steuereinrichtung der Pumpe bei einfachen Mitteln auch bei langem und intensivem Gebrauch wenig störanfällig ist. Dies ist erreicht, indem der Schieber ein Kolbenschieber (19) ist, der zwei Radialbohrungen (28, 29), die ständig an eine Zufuhrleitung (13) für Druckluft angeschlossen sind, und zwei Radialaxialbohrungen (32, 33) aufweist, deren Radialteil jeweils auf gleicher Höhe mit einer der beiden Radialbohrungen liegt und deren Axialteil jeweils an einer der beiden Stirnflächen des Kolbenschiebers (19) mündet, und daß die Kolbenstange (11) zwei Ringnuten (30, 31) aufweist, von denen eine (30) am Ende des Preßhubes die eine Radialbohrung (28) mit der einen Radialaxialbohrung (32) und die andere (31) am Ende des Rückhubes die andere Radialbohrung mit der anderen Radialaxialbohrung (33) verbindet. Der Kolbenschieber steuert in Zusammenwirkung mit der Kolbenstange seine Bewegung druckluftbetätigt selbst.

Fig.2

## Druckluftbetätigte Pumpe für Schmierstoffe

Die Erfindung betrifft eine Pumpe für Schmierstoffe, die selbsttätig gesteuert und druckluftbetätigt ist, bei der eine Zufuhrleitung für Druckluft zu einer Steuereinrichtung führt, von der eine Leitung für Preßhub zur einen Seite eines Druckluftkolbens und eine Leitung für Rückhub zur anderen Seite des Druckluftkolbens führt, und bei der die Steuereinrichtung einen auf einer Kolbenstange angeordneten Schieber aufweist, der gesteuert von der Hin-und Herbewegung der Kolbenstange hin- und herbewegbar ist zwischen einer Stellung, in der er die Zufuhrleitung mit der Leitung für Preßhub verbindet und einer Stellung, in der er die Zufuhrleitung mit der Leitung für Rückzug verbindet.

Bei der Pumpe trägt die Kolbenstange einerends den in einem Druckluftzylinder befindlichen, im Durchmesser großen Druckluftkolben und anderends einen im Durchmesser kleinen Hochdruckkolben in einem Hochdruckzylinder, der mit einem Vorratsbehälter für den Schmierstoff und mit einem Auslaßrohr in Verbindung steht.

Eine bekannte (EU-OS 39 418) Pumpe dieser Art ist eine Faßpumpe, bei welcher der Schieber ein auf der Kolbenstange angeordneter Scheibenschieber ist, der drehbar ist und mit einer Bohrung die Zufuhrleitung in einer Stellung mit der Leitung für Preßhub und in der anderen Stellung mit der Leitung für Rückhub verbindet. Die Hin-und Herdrehung des Scheibenschiebers erfolgt, indem ein Folgeglied von der Kolbenstange entlang einem Steuersteg bewegt wird und unter dem Druck von Haarnadelfedern die Seite des Steuersteges wechselt. Die hier zur Rede stehende Art von Pumpen ist von Vorteil, weil die Steuereinrichtung frei von teuren Ventilen ist. Jedoch ist die bekannte Pumpe in der Steuereinrichtung nachteilig, weil die Folgesteuerung und die Federn störanfällig sind.

Eine Aufgabe der Erfindung ist es somit, eine Pumpe der eingangs genannten Art zu schaffen, deren Steuereinrichtung mit einfachen Mitteln auch bei langem und intensivem Gebrauch wenig störanfällig ist. Die erfindungsgemäße Pumpe ist, diese Aufgabe lösend, dadurch gekennzeichnet, daß der Schieber ein Kolbenschieber ist, der zwei im Abstand des Kolbenschieberhubes voneinander angeordnete Radialbohrungen, die ständig an die Zufuhrleitung für Druckluft angeschlossen sind, und zwei Radialaxialbohrungen aufweist, deren Radialteil jeweils auf gleicher Höhe mit einer der beiden Radialbohrungen liegt und deren Axialteil jeweils an einer der beiden Stirnflächen des Kolbenschiebers mündet, und daß die Kolbenstange zwei Ringnuten mit Abstand aufweist, von denen eine am Ende des Preßhubes die eine Radialbohrung mit der einen Radialaxialbohrung und die andere am Ende des Rückhubes die andere Radialbohrung mit der anderen Radialaxialbohrung verbindet.

Bei der erfindungsgemäßen Pumpe wird auch die Hinund Herbewegung des die Hin-und Herbewegung der Kolbenstange steuernden Schiebers selbsttätig und druckluftbetätigt schiebergesteuert veranlaßt. Der Kolbenschieber steuert in Zusammenwirkung mit der Kolbenstange seine Bewegung druckluftbetätigt selbst. Folgesteuerungsteile und Federn sind entfallen. Die Pumpe bzw. deren Steuereinrichtung ist in Herstellung und Montage vereinfacht, da sie weniger und einfachere Teile aufweist.

Besonders zweckmäßig und vorteilhaft ist es, wenn der Kolbenschieber mittig eine Ringnut für die wahlweise Verbindung der Zufuhrleitung mit der Preßhubseite oder der Rückhubseite des Druckluftkolbens aufweist und beiderseits der mittigen Ringnut je eine Ringnut für die Verbindung der Preßhubseite und der Rückhubseite des Druckluftkolbens mit Entlüftungsleitungen vorgesehen ist. Diese Gestaltung der Steuereinrichtung für die Bewegung der Kolbenstange ist einfach herzustellen.

Besonders zweckmäßig und vorteilhaft ist es dabei, wenn der Kolbenschieber die drei Ringnuten zwischen sich aufnehmende ringförmige Dichtungen trägt. Die Dichtigkeit der Steuereinrichtung ist mit wenig Aufwand erreicht.

Besonders zweckmäßig und vorteilhaft ist es sodann, wenn die Kolbenstange beiderseits der Zylinderkammer des Kolbenschiebers von je einer Dichtung aufgenommen ist. Auch dies verdeutlicht die Einfachheit der bei der erfindungsgemäßen Pumpe nötigen Dichtungsmaßnahmen.

Besonders zweckmäßig und vorteilhat ist es weiterhin, wenn am Kolbenschieber zur Entlüftung Zusatzbohrungen vorgesehen sind, die von je einer der Stirnseiten des Kolbenschiebers ausgehend jeweils in einer der beiden seitlichen Ringnuten mündet. Dies ist eine einfache Möglichkeit, die Entlüftung der beiderseits des Kolbenschiebers befindlichen Räume zu verwirklichen.

Besonders zweckmäßig und vorteilhat ist es noch, wenn der Abstand der beiden Ringnuten der Kolbenstange voneinander gleich der Summe von Hubweg der Kolbenstange + Abstand der beiden Radialbohrungen voneinander ist. Diese einfache Gestaltung ergibt ein komplikationsloses Arbeiten der Steuereinrichtung.

Besonders zweckmäßig und vorteilhaft ist es ebenfalls, wenn die beiden Radialaxialbohrungen einander kreuzen. Auch dies ist eine einfache Ausführung des Kolbenschiebers der erfindungsgemäßen Pumpe.

Die Erfindung läßt sich z.B. bei einer Förderpumpe für Schmierfett realisieren, die das Schmierfett von einem großen Behälter in einen kleinen Behälter umlagert. Eine besonders zweckmäßige und vorteilhafte Ausführungsform der Erfindung liegt jedoch vor, wenn die Pumpe in an sich bekannter Weise als Handfettpresse ausgebildet ist und die den Kolbenschieber umfassende Steuereinrichtung oberhalb des Griffstückes zwischen dem Druckluftzylinder und dem Hochdruckzylinder im Tragkörper angeordnet ist. Bei einer solchen Handfettpresse ist nämlich der geringe Raumbedarf der Steuereinrichtung der erfindungsgemäßen Pumpe von besonderer Bedeutung.

Bei der erfindungsgemäßen Pumpe wird die Pumpgeschwindigkeit mittels eines Steuerventiles in der Zufuhrleitung für Druckluft verändern, das aufgrund Verstellung des Ventilkörpers die Durchtrittsmenge an Druckluft ändert. Besonders zweckmäßig und vorteilhaft ist es also, wenn die Zufuhrleitung über ein Steuerventil führt, bei dem die Durchlaßmenge an Druckluft mittels eines konischen Ventilkörpers verstellbar ist.

In der Zeichnung ist eine bevorzugte Ausführungsform der Erfindung dargestellt und zeigt

Fig. 1 im Schnitt eine druckluftbetätigte Pumpe für Schmierstoffe,

Fig. 2 im Schnitt und in einem gegenüber Fig. 1 vergrößerten Maßstab die Steuereinrichtung der Pumpe gemäß Fig. 1 in einer ersten Stellung

und

Fig. 3 die Steuereinrichtung gemäß Fig. 2 in einer zweiten Stellung.

Die Pumpe gemäß Zeichnung ist als handbediente Fettpresse ausgebildet, die ein Griffstück - (1) aufweist, auf dem ein Tragkörper (2) sitzt, an dem oben ein rohrartiger Vorratsbehälter (3) für Schmierfett auswechselbar eingeschraubt ist. Von dem Vorratsbehälter (3) führt ein Zufuhrkanal (4) zu einem Hochdruckzylinder (5), der über ein federbelastetes Einwegventil (6) in ein Auslaßrohr (7) übergeht. Von dem Vorratsbehälter (3) wird ständig mit leichtem Druck Schmierfett in Richtung zum Hochdruckzylinder (6) gedrückt. Bei Druck auf einen nahe dem Griffstück (1) am Tragkörper (2) angelenkten Betätigungshebel (8) wird Schmierfett durch den Zufuhrkanal (4) angesaugt und durch das Auslaßrohr abgespritzt.

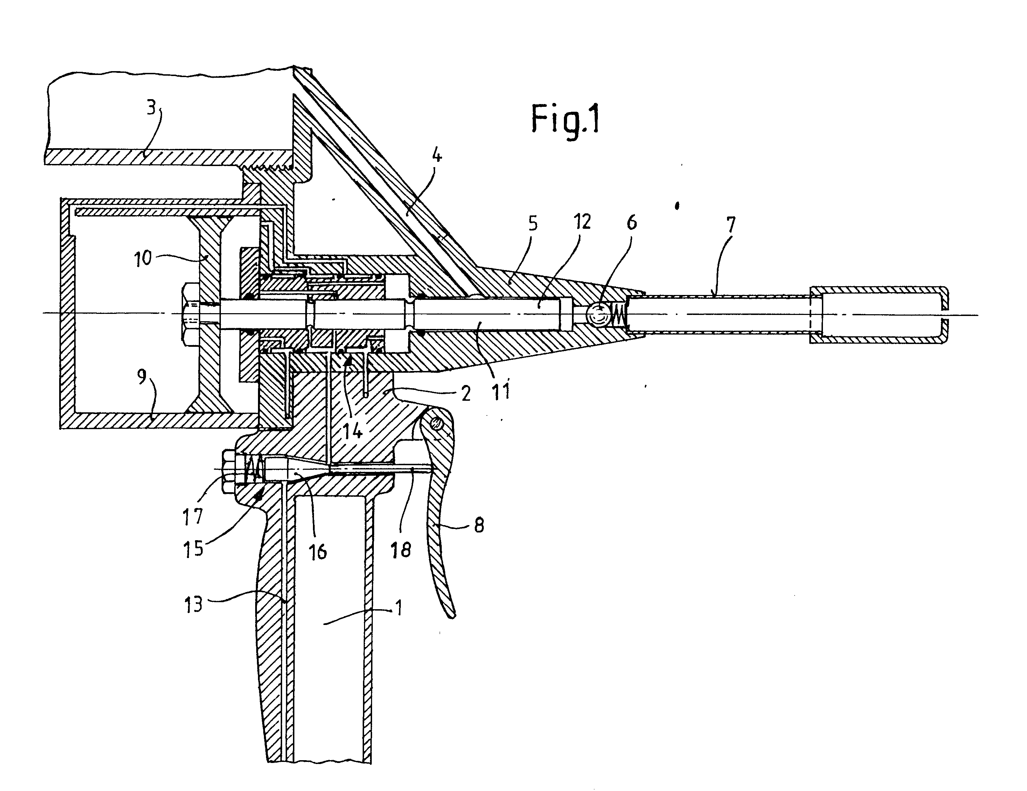

Unterhalb des Vorratsbehälters (3) ist am Tragkörper (2) ein Druckluftzylinder (9) vorgesehen, in dem ein Druckluftkolben (10) hin-und herverschiebbar ist. An dem Druckluftkolben (10) sitzt mittig eine Kolbenstange (11), die aus dem Druckluftzyliner (9) heraustritt, zu dem Hochdruckzylinder (5) führt und dort in einen Hochdruckkolben (12) übergeht, der in dem Hochdruckzylinder hin-und herbewegbar ist. Fig. 1 zeigt die Kolbenstange (11) kurz vor dem Ende des Preßhubes bzw. kurz nach Beginn des Rückzuges. Wenn die der Kolbenstange (11) zugewendete Seite des Druckluftkolbens mit Druckluft beaufschlagt wird, so erfolgt der Rückhub, und wenn die der Kolbenstange abgewandte Seite des Druckluftkolbens mit Druckluft beaufschlagt wird, so erfolgt der Preßhub. Das Verhältnis des Durchmessers des großen Druckluftkolbens (10) zu dem Durchmesser des kleinen Hochdruckkolbens (12) beträgt von 10 : 1 bis 6 : 1.

Von einer nicht gezeigten Druckluftquelle wird über einen nicht gezeigten Anschlußstutzen am Griffstück (1) Druckluft zugeführt, die über eine Druckleitung (13) zu einer Steuereinrichtung (14) geleitet wird. Die Druckleitung (13) verläuft im Griffstück (1) bis zu einem Steuerventil (15) und von dort zur Steuereinrichtung. Das Steuerventil - (15) besitzt in einem konischen Ventilsitz einen konischen Ventilkörper (16), der am dickeren Ende von einer Feder (17) belastet ist und am dünneren Ende in einen Stößel über geht, der in den Bewegungsweg des Betätigungshebels (8) ragt. Bei Druck auf den Betätigungshebel (8) wird der Ventilkörper (16) mehr oder weniger weit vom Ventilsitz abgehoben, d.h. der Durchlaß an Druckluft durch das Steuerventil wird mehr oder weniger weit geöffnet, wodurch eine entsprechend große Förderleistung der Pumpe bewirkt wird. Je weiter der Betätigungshebel (8) zurückgedrückt wird, desto mehr Schmierfett wird durch das Auslaßrohr (7) abgegeben. Wenn der Betätigungshebel (8) losgelassen wird, dann schließt das Steuerventil (14) unter dem Druck der Feder (17).

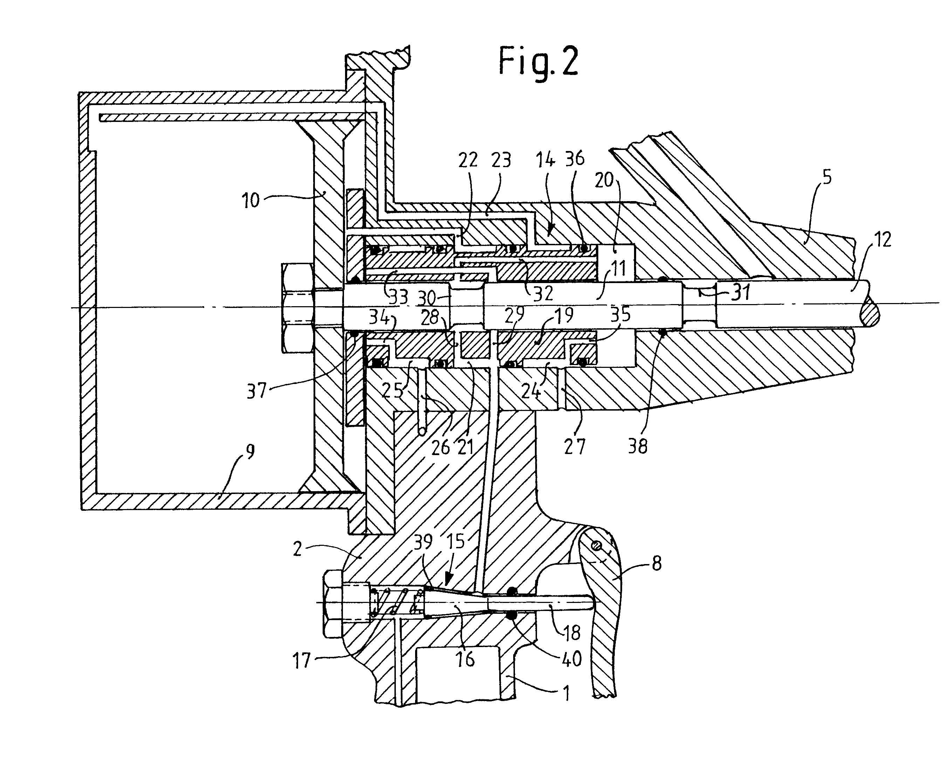

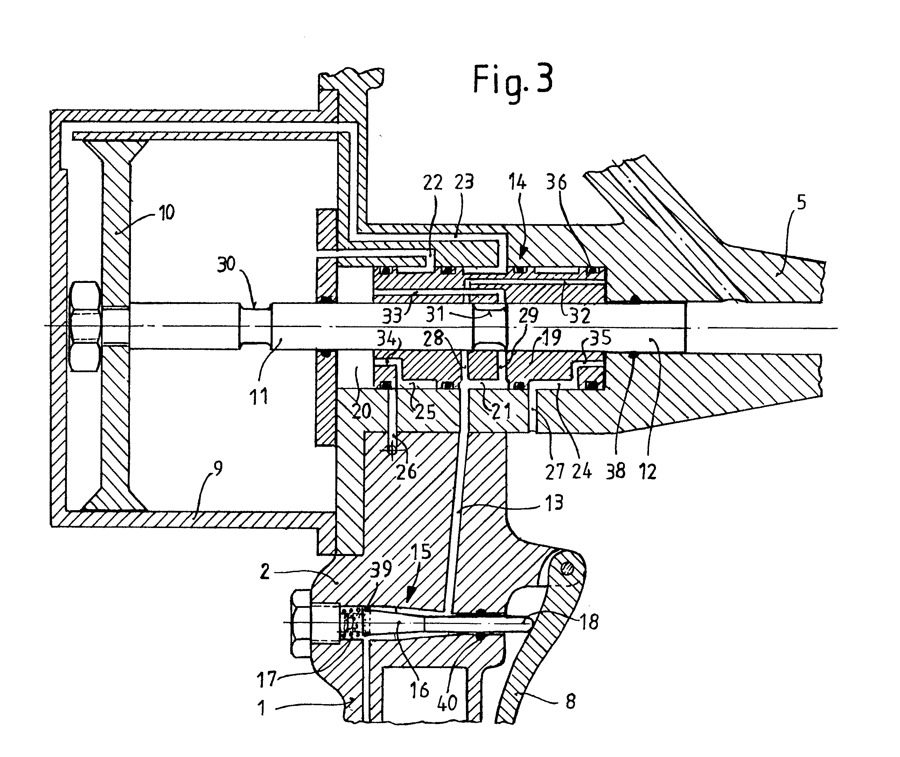

Gemäß Fig. 2 und 3 umfaßt die neben dem Druckluftzylinder (9) angeordnete Steuereinrichtung (14) einen Schieberkolben (19), der in einer Zylinderkammer (20) um einen bestimmten Hubweg hin-und hergleitbar ist. Gemäß Fig. 2 befinden sich der Schieberkolben (19) und der Druckluftkolben (10) in der Stellung bei Beginn des Rückzuges. Gemäß Fig. 3 befinden sich der Schieberkolben (19) und der Druckluftkolben (10) in der Stellung bei Beginn des Preßhubes. Der Schieberkolben (19) weist etwa mittig eine Ringnut (21) von der Breite des Hubweges plus der Breite der beiden weiter unten erwähnten Radialbohrungen (28 und 29) auf, die ständig mit der Mündung der Druckleitung (13) verbunden ist. In der Wandung der Zylinderkammer (20) verläuft ein Radialaxialkanal (22) von der Ring nut (21) bei nach links bewegtem Schieberkolben (19), zum Druckluftzylinder (9) und zwar zu dem auf der "Rückhub" -Seite des Druckluftkolbens (10) befindlichen Teil des Druckluftzylinders. In der Wandung der Zylinderkammer (20) und in der Wandung des Druckluftzylinders (9) verläuft ein Radialaxialkanal (23) von der Ringnut (21) bei nach rechts bewegtem Schieberkolben (19), zum Druckluftzylinder (9) und zwar zu dem auf der "Preßhub" -Seite des Druckluftkolbens (10) befindlichen Teil des Druckluftzylinders.

Der Schieberkolben (19) weist beiderseits der mittigen Ringnut (21) je eine seitliche Ringnut (24, 25) von der Breite des Hubweges plus der Breite der beiden weiter unten erwähnten Radialbohrungen (28 und 29) auf, die ständig mit einer Entlüftungsleitung (26 bzw. 27) in der Wandung der Zylinderkammer (20) in Verbindung steht. Beim Rückhub des Druckluftkolbens (10) gelangt die von diesem verdrängte Luft über den Radialaxialkanal - (23) und die rechte seitliche Ringnut (24) in die Entlüfungsleitung (27). Beim Preßhub des Druckluftkolbens (10) gelangt die von diesem verdrängte Luft über den Radialaxialkanal (22) und die linke seitliche Ringnut (25) in die Entlüftungsleitung (26). Es wird also durch Hin-und Herverschieben des Kolbenschiebers (19) die Hin-und Herbewegung der Kolbenstange (11), d.h. das Pumpen bewirkt.

Für die selbsttätige Hin-und Herbewegung des Kolbenschiebers (19) sitzt dieser gleitbar auf der Kolbenstange (11), die sich durch die Zylinderkammer (20) erstreckt. Der Kolbenschieber (19) ist mit zwei Radialbohrungen (28 und 29) versehen, die beide von der mittleren Ringnut (21) ausgehen. Die Kolbenstange (11) ist mit zwei Ringnuten (30 und 31) versehen, die axial so lang wie der Hub des Kolbenschiebers sind. Der Abstand der . einander zugewandten Kanten der beiden Ringnuten (30 und 31) ist gleich dem Hub des Druckluftkolbens (10). Gemäß Fig. 2 mündet bei nach links gefahrenem Kolbenschieber (19) und nach rechts gefahrener Kolbenstange (11) die linke Radialbohrung (28) in die linke Ringnut (30). Gemäß Fig. 3 mündet bei nach rechts gefahrenem Kolbenschieber (19) und nach links gefahrener Kolbenstange (11) die rechte Radialbohrung (29) in die rechte Ringnut (31). In dem Kolbenschieber (19) ist weiterhin eine Radialaxialbohrung (32) vorgesehen, die bei der Stellung gemäß Fig. 2 von der linken Ringnut (30) der Kolbenstange (12) ausgeht und bei der rechten Stirnseite des Kolbenschiebers endet.

Eine weitere im Kolbenschieber (19) vorgesehene Radialaxialbohrung (33) kreuzt mit Abstand die vorher genannte Radialaxialbohrung (32); sie geht bei der Stellung gemäß Fig. 3 von der rechten Ringnut (31) der Kolbenstange (12) aus und endet bei der linken Stirnseite des Kolbenschiebers (19). Wenn die Kolbenstange (12) in die Endstellung des Rückhubes gelangt, wird der Kolbenschieber (19) durch Druck auf dessen linke Stirnseite nach rechts verschoben, so daß der Druckluftkolben (10) für Preßhub beaufschlagt wird. Wenn die Kolbenstange (12) in die Endstellung des Preßhubes gelangt, wird der Kolbenschieber (19) durch Druck auf dessen rechte Stirnseite nach links verschoben, so daß der Druckluftkolben (10) für Rückhub beaufschlagt wird.

Der Kolbenschieber (19) weist eine Zusatzbohrung (34) auf, die den links vom Kolbenschieber befindlichen Teil der Zylinderkammer (20) mit der linken seitlichen Ringnut (25) und damit mit der Entlüftungsleitung (26) verbindet. Eine im Kolbenschieber (19) vorgesehene weitere Zusatzbohrung - (35) verbindet den rechts vom Kolbenschieber (19) befindlichen Teil der Zylinderkammer (20) mit der rechten Ringnut (24) und damit mit der Entlüftungsleitung (27). Diese Zusatzbohrungen - (34, 35) dienen nicht nur der Entlüftung beim Verschieben des Kolbenschiebers. Sie entspannen auch den Luftdruck auf der jeweils soeben beaufschlagte Stirnseite des Kolbenschiebers, so daß sich dieser bei Beaufschlagung der anderen Stirnseite leicht verschiebt.

Der Kolbenschieber (19) ist mit vier Dichtungen (36) versehen, um die Ringnuten (21, 24, 25) gegen die Wandung der Zylinderkammer (20) abzudichten. Der Boden des Druckluftzylinders (9) weist eine Dichtung (37) für die Kolbenstange (12) und der Hochdruckzylinder (5) weist eine Dichtung (38) für die Kolbenstange (12) auf. Der Ventilkörper - (16) des Steuerventils weist an seinem dicken Ende eine Dichtung (39) auf und ist hinter der abführenden Zufuhrleitung (13) im dünneren Bereich von einer Dichtung (40) umfaßt. Statt Schmierstoffe lassen sich auch ähnliche zähflüssige Stoffe für andere Zwecke mit der Pumpe fördern.

## Ansprüche

1. Pumpe für Schmierstoffe, die selbsttätig gesteuert und druckluftbetätigt ist, bei der eine Zufuhrleitung für Druckluft zu einer Steuereinrichtung führt, von der eine Leitung für Preßhub zur einen Seite eines Druckluftkolbens und eine Leitung für Rückhub zur anderen Seite des Druckluftkolbens führt, und bei der die Steuereinrichtung einen auf einer Kolbenstange angeordneten Schieber aufweist, der gesteuert von der Hin-und Herbewegung der Kolbenstange hin-und herbewegbar ist zwischen einer Stellung, in der er die Zufuhrleitung mit der Leitung für Preßhub verbindet, und einer Stellung, in der er die Zufuhrleitung mit der Leitung für Rückzug verbindet, dadurch gekennzeichnet, daß der Schieber ein Kolbenschieber (19) ist, der zwei im Abstand des Kolbenschieberhubes voneinander angeordnete Radialbohrungen (28, 29), die ständig an die Zufuhrleitung (13) angeschlossen sind, und zwei Radialaxialbohrungen (32, 33) aufweist, deren Radialteil jeweils auf gleicher Höhe mit einer der beiden Radialbohrungen liegt und deren Axialteil jeweils an einer der beiden Stirnflächen des Kolbenschiebers (19) mündet, und daß die Kolbenstange (11) zwei Ringnuten (30, 31) mit Abstand aufweist, von denen eine (30) am Ende des Preßhubes die eine Radialbohrung (28) mit der einen Radialaxialbohrung (32) und die andere (31) am Ende des Rückhubes die andere Radialbohrung (29) mit der anderen Radialaxialbohrung (33) verbindet.

2. Pumpe nach Anspruch 1, dadurch gekennzeichnet, daß der Kolbenschieber (19) mittig eine Ringnut (21) für die wahlweise Verbindung der Zufuhrleitung (21) mit der Preßhubseite oder der Rückhubseite des Druckluftkolbens (10) aufweist und beiderseits der mittigen Ringnut je eine Ringnut (24, 25) für die Verbindung der Preßhubseite und der Rückhubseite des Druckluftkolbens (10) mit Entlüftungsleitungen (26, 27) vorgesehen ist.

3. Pumpe nach Anspruch 2, dadurch gekennzeichnet, daß der Kolbenschieber (19) vier die drei Ringnuten (21, 24, 25) zwischen sich aufnehmende ringförmige Dichtungen (36) trägt.

4. Pumpe nach Anspruch 1, dadurch gekennzeichnet, daß die Kolbenstange beiderseits der Zylinderkammer (20) des Kolbenschiebers (19) von je einer Dichtung (37, 38) aufgenommen ist.

5. Pumpe nach Anspruch 2, 3 oder 4, dadurch gekennzeichnet, daß im Kolbenschieber (19) zur Entlüftung Zusatzbohrungen (34, 35) vorgesehen sind, die von je einer der Stirnseiten des Kolbenschiebers ausgehend jeweils in einer der beiden seitlichen Ringnuten (24, 25) mündet.

6. Pumpe nach einem der vorhergehenden Ansprüche, dadurch gekennzeichnet, daß der Abstand der beiden Ringnuten (30, 31) der Kolbenstange - (19) voneinander gleich der Summe von Hubweg der Kolbenstange plus Abstand der beiden Radialbohrungen (28, 29) voneinander ist.

7. Pumpe nach einem der vorhergehenden Ansprüche, dadurch gekennzeichnet, daß die beiden Radialaxialbohrungen (32, 33) einander kreuzen.

8. Pumpe nach einem der vorhergehenden Ansprüche, dadurch gekennzeichnet, daß sie in an sich bekannter Weise als Handfettpresse ausgebildet ist und die den Kolbenschieber (19) aufweisende Steuereinrichtung (14) oberhalb des Griffstückes (1) zwischen dem Druckluftzylinder - (9) und dem Hochdruckzylinder (5) im Tragkörper - (2) angeordnet ist.

9. Pumpe nach einem der vorhergehenden Ansprüche, dadurch gekennzeichnet, daß die Zufuhrleitung (13) über ein Steuerventil (15) führt, bei dem die Durchlaßmenge an Druckluft mittels eines konischen Ventilkörpers (16) verstellbar ist.

**Fig.1**

# Fig.2

0 212 369

Fig. 3